# EUROPEAN PATENT APPLICATION

(11) **EP 4 488 822 A1**
(43) Date of publication of application: **08.01.2025**
(21) Application number: 23183194.2
(22) Date of filing: 04.07.2023
(51) Int. Cl.: G06F 7/58, G06Q 20/38, H04L 9/08, H04L 9/32, H04L 9/40, H04W 12/00

(54) **SECURE SERVICE PROVIDER UNIT, SECURE TRANSACTION UNIT, ELECTRONIC TOKEN TRANSACTION SYSTEM AND METHOD FOR SECURE TOKEN TRANSACTION**

(71) Applicant: Giesecke+Devrient advance52 GmbH, 81677 München (DE)
(72) Inventor: BOHN, Markus, 81677 München (DE); LERCHER, Thomas, 81677 München (DE)
(74) Representative: Ter Meer Steinmeister & Partner

(57) **Abstract**

The invention relates to a secure service provider unit within an electronic token transaction system. The secure service provider unit comprises a secure transaction unit extension, wherein the secure transaction unit extension is arranged in a communication path of an electronic token transaction between two secure transaction units. The secure transaction unit extension is assigned to one of the two secure transaction units, the secure transaction unit extension is configured to receive a token, store the received token in a token storage; and receive an accessibility indication that causes the secure transaction unit extension to send the stored token. The invention also refers to a secure transaction unit. The invention also relates to an electronic token transaction system in particular an electronic payment transaction system. The invention also relates to a method for secure token transaction in an electronic token transaction system.

## Description

The invention relates to a secure service provider unit. The invention also refers to a secure transaction unit. The invention also relates to an electronic token transaction system in particular an electronic payment transaction system. The invention also relates to a method for secure token transaction.

Tokens - also referred to as digital assets, electronic coins, coin data sets - may represent any digital asset, in particular a digital currency, preferably a central bank digital currency, short CBDC. These tokens are issued and deleted by an issuing unit of the token transaction system, such as an issuing authority, or a central bank unit or a commercial bank unit, hereinafter also referred to as secure token issuing unit.

There are different technical approaches for exchanging electronic tokens such as a digital asset e.g., digital currency such as CBDC, issued by a central bank within the electronic tokens transaction system.

According to a first approach, tokens are merely cryptographically secured by the central bank unit and the cryptographically secured tokens are exchanged directly between token transaction units - also referred to as secure wallets and/or secure elements - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach, as for instance described in WO 2020 / 212 331 A1, tokens are stored in token transaction units (also called wallets or payment application units or secure elements) to be directly exchanged between users of an electronic token transaction system. For security-, verification- and registration-purposes, a central token reference register stores token references of all valid tokens without knowing the tokens itself. So, the user can check validity of a received token with dedicated requests send to the token reference register. The token reference register only stores token references of the corresponding token. Tokens can be further modified by each user of the token transaction system, e.g., tokens can be switched from one user to another user (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security.

Electronic token transactions and/or storage of tokens and any associated transaction data and/or storage data in an electronic token transaction system must be safe and secure and so, means for protecting confidentiality, integrity, and availability of exchanged and/or stored token data must be implemented. This is especially true for electronic payment transactions and associated payment transactions and payment storages in which a monetary value is linked with each token.

A target transaction unit within the token transaction system may temporarily or permanently be inaccessible for receiving tokens from another transaction unit. This may be caused by a restricted online connectivity of the target transaction unit, and/or a lack of communication means for online receiving of tokens, and/or a deactivation of communication means, and/or an unfinished registration process of a user/transaction unit at the token transaction system, and/or a temporarily blocking caused by the transaction system, e.g. due to an authority order or an unbalanced token account or the like and/or if the transaction unit does not have online communication means so that a terminal device with such online communication means is always required to send/receive tokens with such transaction unit.

However, there may be a need to transfer tokens to an inaccessible transaction unit, e.g., to complete a token transaction, such as an electronic payment transaction or a smart contract transaction. Especially, if the transaction unit needs communication capabilities of a terminal device to send/receive tokens with such transaction unit, the transaction unit is online only sporadically and for short periods of time that in turn means that there is a very high probability that incoming token transactions are affected, e.g., related to token transaction to/from family members, welfare, salary, reimbursements.

The above-identified objectives are solved with the features of the independent patent claims. Further advantageous embodiments are described in the dependent patent claims.

In an aspect of the present invention there is provided a secure service provider unit within an electronic token transaction system.

The secure service provider unit comprising a secure transaction unit extension. This secure transaction unit extension may be considered as an online representative instance of a respective secure transaction unit within the secure token transaction system. The secure transaction unit extension is uniquely assigned to one (only one) secure transaction unit within the secure token transaction system, i.e., the secure transaction unit extension may act on behalf of the secure token transaction system, and/or the secure transaction unit extension may provide services to third parties (e.g., other transaction units) as the secure transaction unit. There may be a one-to-one relationship between a secure transaction unit and a secure transaction unit extension.

The secure transaction unit extension is arranged between two secure transaction units. Between these two secure transaction units, an electronic token transaction should be performed. The secure transaction unit is arranged in a logical communication path of such an electronic token transaction especially in use cases in which for performing a token transaction the secure target transaction unit cannot be directly accessed/reached by the source secure transaction unit, namely because the target transaction unit is offline. The secure transaction unit extension is uniquely assigned to one of the two secure transaction units.

The secure transaction unit extension may be referred to as an intermediary instance (or intermediary wallet) within a token transaction of two transaction units. The secure transaction unit extension may also be referred to as a proxy transaction unit, or proxy-wallet.

The secure transaction unit extension is configured to receive, from a source secure transaction unit, a token, and a secure transaction unit identifier, wherein the secure transaction unit identifier identifies a target secure transaction unit to which the token is to be sent.

The secure transaction unit extension is further configured to store the received token in a retarded token storage. This token storage may be a token storage or token vault, e.g., of the service provider unit or the secure transaction unit extension or in another instance of the token transaction system, such as a token reference register, to which the secure transaction unit extension has exclusive read/write access rights. This retarded token storage may be configured to store a plurality of tokens for the target secure transaction unit identified by the secure transaction unit identifier.

In contrast to known token transactions, the secure token transaction unit does not amend the received tokens any further. This includes that the secure token transaction unit does not perform any modification, such as switch, merge, split, on the received token. From the token transaction system's point of view, the transaction unit extension is a transparent unit within the token transactions, because no changes to the token are performed.

The secure transaction unit extension is further configured to receive, from the target secure transaction unit, an accessibility indication that causes the secure transaction unit extension to send the stored token to the target secure transaction unit. In this case, the secure transaction unit extension may be considered as a receiving-service for tokens in case the target transaction unit to which the token should be transferred is inaccessible. As soon as the secure transaction unit extension receives the accessibility indication, the token is sent to the respective target secure transaction unit. In this case, the secure transaction unit extension may also be considered as a sending-service for tokens in case the target transaction unit to which the token should be transferred is inaccessible.

The accessibility indication may be an indication from the target secure transaction unit that an online connection between the target secure transaction unit and one of the token transaction systems is established, e.g., that internet and/or mobile communication is now possible. This accessibility indication may be polled by the secure transaction unit extension within predetermined time frames to check whether accessibility is possible. This accessibility indication may be requested by the secure transaction unit extension based on a trigger received from an instance of the transaction system. This accessibility indication may be received from the target secure transaction unit independently, e.g., as soon as the target secure transaction unit has established a respective communication link/path with the secure transaction unit extension.

Due to a preferred one-to-one relationship between a secure transaction unit and a secure transaction unit extension the step is performed by the secure transaction unit extension.

The secure transaction unit extension is caused (triggered) by the accessibility indication to send the token to the target secure transaction unit. In a preferred scenario, the tokens are directly sent to the target transaction unit. However, this does not exclude scenarios, in which further instances, such as trusted service provider units are involved to manage the token transfer to the target secure transaction unit.

The above concept covers at least four different use scenarios that are shortly explained hereinafter:
Use case 1: The secure token transaction unit extension may be assigned to one or more (or the) source transaction unit. If - during a desired token transaction - the target secure token transaction unit is inaccessible (offline, switched-off), the secure token transaction unit extension is configured to - temporarily - store the token(s) that are considered for the target secure token transaction unit. As soon as the target secure token transaction unit is accessible again, e.g., by providing the respective accessibility indication, the secure token transaction unit extension operates as the source secure token transaction unit to transfer (transact) the token to the target secure token transaction unit. In this case, the secure token transaction unit extension provides a sending service as a service provided by the secure token transaction unit extension (extension service).
Use case 2: The secure token transaction unit extension is assigned to one or more (or the) target transaction unit. If - during a desired token transaction - this target secure token transaction unit is inaccessible (offline, switched-off), the secure token transaction unit extension is configured to - temporarily - store the tokens that are considered for the target secure token transaction unit. This means, if the target secure token transaction unit is not accessible, the secure token transaction unit extension operates as the target secure token transaction unit. As soon as the target secure token transaction unit is accessible again, e.g., by providing the respective accessibility indication, the secure token transaction unit extension transacts the token(s) to the target secure token transaction unit. In this case, the secure token transaction unit extension provides a receiving service as a service provided by the secure token transaction unit extension (extension service).
Use case 3: The secure token transaction unit extension is a local terminal, and it may be assigned to the source secure transaction unit. The source secure token transaction unit locally (without online connectivity) transfers (transacts) tokens to the secure token transaction unit extension, e.g., via NFC or contact-based communication means. As soon as the secure token transaction unit extension is accessible (has online connectivity and/or is switched-on), it operates as the source secure token transaction unit within the transaction system to transfer the token(s) to the target transaction unit. In this case, the secure token transaction unit extension provides a sending service as a service provided by the secure token transaction unit extension (extension service) for permanently offline (unbanked) secure token transaction units.
Use case 4: The secure token transaction unit extension is a local terminal, and it is assigned to one or more target secure transaction units. If the target secure token transaction unit is not accessible, the secure token transaction unit extension operates as the target secure token transaction unit. As soon as the target secure token transaction unit is accessible again, e.g., by providing the respective accessibility indication, e.g. it is in communication connection with the secure token transaction unit extension, e.g. via NFC or contact-based, the secure token transaction unit extension transacts the token(s) to the target secure token transaction unit. In this case, the secure token transaction unit extension provides a receiving service as a service provided by the secure token transaction unit extension (extension service) for permanently offline (unbanked) secure token transaction units.

For all use cases, especially for use cases 3 and 4, however, the assignment is not limited to a "fixed" (source/target) secure transaction unit. Any secure transaction unit that is in the (NFC-) vicinity or that is in contact-based communication with the local terminal is configured to transfer money to the local terminal for storage. The local terminal does not have to be explicitly set or linked to a specific secure transaction unit.

The inventive idea is to enable the transfer of tokens to/from a temporarily or permanently inaccessible (=unreachable) secure transaction unit by using a secure transaction unit extension (an intermediate instance) that receives the tokens and causes its transmittal (forwarding) of the tokens at a later stage, namely when the target secure transaction unit is accessible (reachable).

The inventive idea is also to enable the transfer of tokens from a local source secure token transaction unit via a local terminal that acts as a local (without online connectivity) receiver/sender for the source secure token transaction unit and that transfers the tokens to the target secure token transaction unit at a later stage, e.g., upon online connectivity of the local terminal.

So, even for unbanked participants/user, whose registration process may not be initiated or may not be completed, token transaction is now possible. As soon as a transaction unit identifier of that "unbanked" participant is known, token transactions can be initiated. The tokens are suspended within the transaction unit extension until the secure transaction unit of that participant/user is reachable/accessible. Once the target secure transaction unit of that participant/user is reachable/accessible, the transaction unit extension recognizes that via the accessibility indication and the token transaction can be sent (the transaction can be completed) to the target secure transaction unit.

A participant or user in the token transaction system to which a transaction unit may be assigned, can be a natural person, a legal person, an organization, and/or a machine, e.g., an internet-of-things, element.

In a preferred embodiment, the source secure transaction unit and/or the secure transaction unit extension being issued and/or managed by the secure service provider unit. In another preferred embodiment, the target secure transaction unit and/or the secure transaction unit extension being issued and/or managed by the secure service provider unit. The secure transaction unit may be issued and/or managed by an entity different from the entity that issues and/or manages the secure transaction unit extension, e.g., a central token issuing unit such as a central bank may issue and/or manage the secure transaction unit, whereas a service provider unit, such as a commercial bank, issues the secure transaction unit extension, or vice versa.

Managing the transaction unit may include loading and unloading tokens at the respective secure transaction unit. Managing the transaction unit may also include sending registration requests related to tokens of the respective secure transaction unit to a token reference register. Managing the transaction unit may also include sending protocol data related to token transaction(s) of the respective secure transaction unit to a protocol data register.

Since secure transaction units are issued/managed by the (financial) service provider units, the issuing/managing service provider unit always gets to know when the respective secure transaction unit is accessible/reachable or not. This makes the service provider unit the perfect host for the secure transaction unit extension. However, the secure transaction unit may be issued and/or managed by an entity different from the entity that issues and/or manages the secure transaction unit extension; e.g. a central token issuing unit such as a central bank may issue and/or manage the secure transaction unit, whereas a service provider unit, such as a commercial bank, issues the secure transaction unit extension, or vice versa.

In a preferred embodiment, the secure transaction unit extension comprises a secure transaction unit extension certificate and/or a secure transaction unit extension identifier configured to indicate the secure transaction unit extension within any token transaction. In this scenario, the target secure transaction unit may certify the (its) secure transaction unit extension to receive token on behalf of / instead the target secure transaction unit. So, the target secure transaction unit has a certificate that certifies it as an extension (proxy) for the secure transaction unit.

In a preferred embodiment, the secure transaction unit extension certificate is used within the receipt of the token from the source secure transaction unit that causes generation of protocol data to be stored in a protocol data register, the protocol data comprising the source secure transaction unit identifier and the target secure transaction unit identifier and one or more token elements of the token. So, a secure transaction unit extension identifier will not be included in the protocol data. So, from the token transaction system's point of view, the transaction unit extension is not only a transparent unit within the token transactions, because no changes to the token are performed, but also the transaction unit extension does not appear in the protocol data, which is relevant both for tax issues and for system monitoring.

In a preferred embodiment, the secure transaction unit extension is configured to operate as the target secure transaction unit within the electronic token transaction system and transfers the token(s) to the target secure transaction unit as soon as the target secure transaction unit indicates its accessibility. This embodiment covers the above described uses cases 2 and 4. There is an automatic receipt of all tokens that are assigned to be received in the target secure transaction unit if the target secure transaction unit is (again) accessible/reachable. Thus, the secure token transaction unit extension acts as a receiving service for the target secure token transaction unit. So, the target secure token transaction unit has no necessity to be online accessible to receive tokens from another token transaction unit.

Alternatively, the secure transaction unit extension is configured to operate as the source secure transaction unit within the electronic token transaction system and transfers the token to the target secure token transaction unit as soon as the target secure transaction unit (TU2) indicates its accessibility. This embodiment covers the above-described use cases 1 and 3. Thus, there is an automatic sending of all tokens that are assigned to be sent from the source secure transaction unit, if the target secure transaction unit is accessible/reachable again. The secure token transaction unit extension acts as a sending service for the source secure token transaction unit. So, the source secure token transaction unit has no necessity to remain online accessible to wait until the target token transaction unit becomes accessible.

In a preferred embodiment, the sending of the stored token to the target secure transaction unit is caused if (only if) a condition for sending the stored token is fulfilled. So, not only an accessibility must be there but also that a condition (in the sense of a smart contract) must be met. For example, a trigger comes from another party, or the condition is a testable condition, such as a token transaction performing date such as "send after date" or that a website must be reachable. For conditions related to token transaction it is referred to patent application WO 2023 / 046 317 A1.

The term "momentarily" may be synonymous to "temporarily" and indicates a period in which the transaction unit may not be reached/ accessible, however this time is planned to end at some time point.

In a preferred embodiment, the token is received, stored, and sent in encrypted form, preferably together with a key identifier. So, the tokens are protected against any attacking attempt, because even if the attacker can read out the token storage of the secure transaction unit extension, it is not possible to spend the token due to its cryptographically encryption. A respective decryption key is only stored on the target secure transaction unit itself and only by that, the token can be decrypted to receive the token and its token value. This enables an interesting use case: It is now possible, to preload a publicly accessible token storage (as the token transaction unit extension) with a plurality of encrypted tokens. This publicly accessible token storage can be seen as a "stuffed automated teller machine, ATM" which can now be used as offline storages with encrypted tokens in form of money. If someone steals this offline storage, the encrypted tokens therein cannot be used. It also increases data privacy - if a transaction is initiated and the target secure transaction unit is not reachable/accessible, the source secure transaction unit identifier, a token transaction reason (if any) and another token element, such as monetary value may be encrypted so that an (intermediate) service provider unit, e.g. hosting the secure transaction unit extension, cannot read out the token transaction details to draw any conclusions apart from the number of transactions.

In a preferred embodiment, the secure service provider unit is further configured to provide a public key of a cryptographic key pair to the source secure transaction unit or the target secure transaction unit. Thus, the source secure transaction unit is enabled with performing the encryption. The public key may alternatively be provided from a key repository (key storage) within the transaction system. Thus, the source secure transaction unit is configured to perform the encryption and only encrypted token are received at the secure transaction unit extension. Preferably, the key pair is provided by the secure transaction unit. The public key is stored in the secure transaction unit extension. In a token transaction, if the source target transaction unit recognizes that the target transaction unit is inaccessible, the source target transaction unit requests the public key and encrypts the token prior sending it to the secure transaction unit.

In a preferred embodiment, the secure service provider unit is further configured to store a plurality of public key of cryptographic key pairs for the source secure transaction unit or the target secure transaction unit. This storing may be based on transaction unit identifier for that source/target transaction unit.

Each of the plurality of keys may further comprise a key indicator that may be received together with the token to indicate which of the plurality of public keys was used to encrypt the token.

The secure service provider unit may be configured to host a plurality of secure transaction unit extensions, e.g., a secure transaction unit extension for each transaction unit that was issued by this secure service provider unit, or a secure transaction unit extension for each transaction unit that is managed by this secure service provider unit. The secure service provider unit may be configured to store a plurality of public keys of cryptographic key pairs based on respective secure transaction token identifiers.

There may be a one-to-one relationship between secure transaction unit extension and a secure transaction unit.

Alternatively, a secure transaction unit extension may be a (trusted) secure transaction unit extension that is assigned to a plurality of secure transaction units, and that is configured to manage all tokens assigned to this plurality.

Each of the plurality of keys may further comprise a key indicator that may be received together with the token to indicate which of the plurality of public keys was used to encrypt the token.

In a preferred embodiment, the encrypted token comprises a trusted service provider identifier that indicates a trusted service provider unit (or an address to reach it) to which the encrypted token is forwarded for being stored in a trusted service provider storage.

The use of trusted service provider units is advantageous for transaction units that are permanently inaccessible/unreachable for online token transactions, e.g., via internet or mobile communication, e.g. if the participant/user does not have any access to the internet at any time. Therefore, the source/target transaction unit may appoint one or more trusted service provider units, so called "merchant(s) of trust", that enable the internet access. This trusted service provider unit is configured to receive the (encrypted) retarded tokens and is further configured to send it to the target transaction unit of the (unbanked, offline) participant/user. This receiving can occur as an offline token transaction. The target transaction unit is configured to decrypt the token and so, can use the token value for further purposes. Such trusted service provider units (merchants of trust) may be the above-mentioned stuff ATM.

In a preferred embodiment, the public key is provided together with the trusted service provider identifier of the trusted service provider unit, this preferably being a secure merchant transaction unit.

The trusted service provider unit may be a financial service provider unit that offers offline token transactions.

In another aspect of the invention there is provided a secure token transaction unit for managing token transactions in an electronic payment transaction system. The secure token transaction unit comprises means for transmitting to a secure transaction unit extension of a secure service provider unit or a local terminal that provides an extension service for the secure token transaction unit (e.g. as described above), a token and a secure transaction unit identifier, wherein the secure transaction unit identifier (uniquely) indicates a target secure transaction unit to which the token is to be sent. The secure token transaction unit further comprises means for sending to the secure transaction unit extension of the secure service provider unit, an accessibility indication that causes the secure transaction unit extension of the secure service provider unit or the local terminal to send the stored token to the target secure transaction unit. The secure token transaction unit further comprises means for sending a token to the secure transaction unit extension of the secure service provider unit in case a target secure transaction unit is not accessible. The secure token transaction unit preferably further comprises means for transmitting protocol data to a protocol data register of the electronic transaction system for protocolling a token transaction in the electronic token transaction system. The secure token transaction unit preferably further comprises means for transmitting registration requests to a token reference register of the electronic transaction system for registering the tokens in the electronic payment transaction system.

The protocol data may comprise a source secure transaction unit identifier and a target secure transaction unit identifier and one or more token elements of the token. So, a secure transaction unit extension identifier will not be included in the protocol data. So, from the token transaction system's point of view, the transaction unit extension is not only a transparent unit within the token transactions, because no changes to the token are performed, but also the transaction unit extension does not appear in the protocol data, which is relevant both for tax issues and for system monitoring.

Preferably, the secure token transaction unit further comprises means for exchanging one or more tokens with other secure token transaction units in the electronic token transaction system. So, the secure transaction unit is capable of receiving of tokens from and/or transmitting of tokens to another secure transaction unit in the system.

Preferably, the secure token transaction unit further comprises means for transmitting registration requests to a token reference register of the electronic transaction system for registering the tokens in the electronic payment transaction system.

The control means of the secure transaction unit is further configured to generate one or more token references, especially upon modification commands (replacement requests) being processed by the secure transaction unit, the modification commands being preferably one or more of a switch-command, a merge-command, and a split-command, wherein the modification commands are only performed for tokens having the same token-type information. For further details related to these modification commands it is referred to WO 2020 / 212 331 A1 and WO 2020 / 212 331 A1. This enables the secure token transaction unit to participate in the favorable third approach as described above.

A secure token transaction unit (as described herein), also referred to as secure wallet, secure token management unit; token wallet; and/or wallet may be used to locally manage token in a secure element itself and/or to modify the tokens and to register the token in the electronic token transaction system. The token may be stored in a token storage that is also managed by the token-wallet.

Alternatively, or additionally, a secure token transaction unit may be a secure account-wallet of the above second or third approach that is also referred to as secure account management unit. Such a secure account-wallet is used to not manage tokens in a secure element itself but in a decentralized ledger, such as a blockchain, or a centralized ledger, or a database that stores the token centrally in the electronic token transaction system. Managing, modifying, and/or registering of the tokens in the electronic transaction system is initiated by the secure account-wallet, however, token transaction or token storage is performed remote of the secure element or the service provider unit.

Each secure token transaction unit comprises one secure token transaction unit identifier, also referred to as wallet-ID or wallet identification data. The secure token transaction unit identifier is assigned to a specific secure token transaction unit for uniquely identifying the secure token transaction unit in the electronic token transaction system. The secure token transaction unit identifier is preferably stored in the specific secure wallet.

The secure token transaction unit identifier may be generated at the unit that issues the secure token transaction unit, such as a financial service provider unit or a central entity in the transaction system. The generation may comprise a coding of data by control means of that issuing unit. In such a case, the service provider unit may code the secure token transaction unit identifier. This coding is performed to assign the secure token transaction unit identifier with the secure token transaction unit that is to be issued. Each token transaction made by this secure token transaction unit and/or each token being managed, such as stored, by this secure token transaction unit can be locally protocolled and in case a suspicious transaction or fraudulent pattern is identified, the protocols may be reviewed.

Alternatively, the secure token transaction unit identifier may be generated by an official authority, a secure token issuing unit, e.g., a central bank unit. In this case, the secure token transaction unit identifier may be received by control means of the secure token transaction unit issuing unit or the secure register unit.

In a preferred embodiment, the secure token transaction unit identifier is a mandatory data to be transmitted between individual users in the electronic transaction system for direct exchange of tokens. This may be a system requirement to ensure high standard security and in such a case, the secure token transaction unit identifier is not only used to uniquely identify the secure token transaction unit, but also possible to identify the "real" user by resolving the user information by using the secure register unit.

In a further embodiment, the secure token transaction unit identifier comprises a plurality of data fields. One or more other data fields of the plurality of data fields may include a version value that expresses the current version of the secure token transaction unit identifier format that is used.

One or more other data fields of the plurality of data fields of the secure token transaction unit identifier may include a token issuing unit identifier that expresses the token issuing unit within the electronic token transaction system. With such a data field it is possible to enable multi-currency token transactions or type-dependent token transactions. A first identifier may be used to identify a first token issuing unit, e.g., a first central bank or a first financial service provider unit, that issues token of a first currency or first type, whereas a second identifier may be used to identify a second token issuing unit, e.g. a second central bank or a second financial service provider unit that issues token of a second currency. To be clearer: One electronic token transaction system may comprise more than one token issuer instances. For instance, a first financial service provider unit, such as a commercial bank A, may issue token-A and a second financial service provider unit, such as a commercial bank B, may issue token-B. Token-A always represents a liability with respect to the first financial service provider unit, even if - for whatever reason - this token A is managed by the second financial service provider unit. Token-B always represents a liability with respect to the second financial service provider unit, even if - for whatever reason - this token B is managed by the first financial service provider unit.

One or more other data fields of the plurality of data fields of the secure token transaction unit identifier may include an identifier of the service provider unit and/or a smart card producer and/or card manufacturer and/or card issuer to identify the service provider unit and/or the smart card producer and/or card manufacturer and/or card issuer or other stakeholder in the token transaction system.

Preferably, the secure token transaction unit identifier further comprises a data element for a type-value configured to identify the type of the digital identification data.

Preferably, the secure token transaction unit identifier further comprises a data element for a count-value configured to identify the number of secure token transaction units issued by the secure service provider unit.

Preferably, the secure token transaction unit identifier is inserted into a subject name data field of a cryptographical certificate used within a token transaction or within a storage of tokens within the electronic token transaction system. Since, certificates may be used to clearly identify the user in a token transaction/storage, no additional data set is required to derive the user in case of suspicious transaction and or suspiciously stored token.

Each combination as named herein may be referred to as a concatenation, which is a logical combination used in information technology.

In an embodiment, the secure token transaction unit is a secure element that is operatively connected to an electronic equipment of a participant in the electronic payment system.

In an embodiment, the secure token transaction unit is a secure wallet that is hosted at a service provider unit.

The control means may be configured to access a token storage, preferably a token storage of the secure transaction unit.

The secure transaction unit may comprise a token storage as a physical entity. The secure token transaction unit may be configured to access the token storage. The token storage may be a token vault of this secure transaction unit. Each secure transaction unit in the transaction system may comprise its own token storage.

From such token storage accessible by the secure token transaction unit, each token can be transferred to any other secure token transaction unit, e.g., owned by a customer of the secure transaction unit.

The secure token transaction unit may be a secure wallet that may be a hardware security module built in hardware or software to enable tamperproof and secure access to the tokens.

In another aspect there is provided an electronic token transaction system. The electronic token transaction system comprises a plurality of secure token transaction units as for instance described above.

The electronic token transaction system further comprises one or more secure service provider units as described above, wherein each retarded token storage is configured to store received token.

The electronic token transaction system may further comprise a secure token issuing unit comprising a minting unit configured to generate a new token to be issued in the electronic token transaction system; and a melting unit configured to delete tokens to be deleted from the electronic transaction system.

The electronic token transaction system may further comprise one or more secure token reference register units for registering the tokens of the electronic transaction system.

The electronic token transaction system may further comprise one or more protocol data register for protocolling token transactions in the electronic token transaction system.

The electronic token transaction system may further comprise one or more trusted service provider units configured to provide public keys for encrypting the tokens to the secure transaction unit; and/or receive the encrypted token for being stored in a storage of the trusted service provider unit.

The electronic token transaction system may further comprise a look-up service configured to store a link between a secure transaction unit identifier and a secure transaction unit extension identifier; and/or a link between a secure transaction unit identifier and a secure service provider unit identifier; and/or a link between a secure transaction unit identifier and a public key used for encrypting a token; and/or a link between a secure transaction unit identifier and services provided by a secure transaction unit extension.

A token reference register may be a unit within the electronic payment transaction system. The token reference register may be either a central register or database of the transaction system or a decentralized register or a database such as a DLT of the transaction system TS. It may be a regular database, a blockchain, a DLT or anything else suitable to store token references.

For a registration of a token in the token reference register, a token reference of the token may be generated. Each token reference comprises a public value, e.g., a public key of an asymmetric cryptographic key pair, wherein the private value of the token is the private key of the asymmetric cryptographic key pair. In this embodiment, the private value and the public value are considered as a token element pair. The token reference may also comprise a monetary value. The token reference may be sent to and stored in the token register upon registration request (also referred to as replacement request). So, a token becomes registered as a valid token in the token transaction system and can be used for further online or offline electronic payment transactions.

The electronic token transaction system may also comprise one or more trusted service provider configured to encrypt the secure token transaction unit identifier prior storing in the storage means of the secure register unit or provide an encryption key to the secure register unit; and/or to receive the encrypted secure token transaction unit identifier from the output means of the secure register unit upon request from any secure token transaction unit and decrypt the encrypted secure token transaction unit identifier.

In another aspect there is provided a method for secure token transaction in an electronic token transaction system, the method being performed in a service provider unit, preferably as discussed above. The method comprising the following steps: receive, from a source secure transaction unit, a token and a secure transaction unit identifier, wherein the secure transaction unit identifier assigns a target secure transaction unit to which the token is to be sent; store the received token in a retarded token storage; and receive, from the target secure transaction unit, an accessibility indication that causes the secure transaction unit extension to send the stored token to the target secure transaction unit, or receive, from the source secure transaction unit, an indication that causes the secure transaction unit extension to send the stored token to the target secure transaction unit. In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a secure electronic payment transaction system for token transactions with secure transaction units of the prior art.
Fig. 2a shows an exemplary embodiment of a secure electronic token transaction system having a secure service provider according to the invention.
Fig. 2b shows another exemplary embodiment of a secure electronic token transaction system having a secure service provider according to the invention.
Fig. 3 shows another exemplary embodiment of a secure electronic token transaction system having a secure service provider according to the invention.
Fig. 4 shows another exemplary embodiment of a secure electronic payment transaction system having a secure service provider according to the invention.
Fig. 5 shows another exemplary embodiment of a secure electronic token transaction system having a secure service provider according to the invention.
Fig. 6 shows another exemplary embodiment of a secure electronic token transaction system having a secure service provider according to the invention.

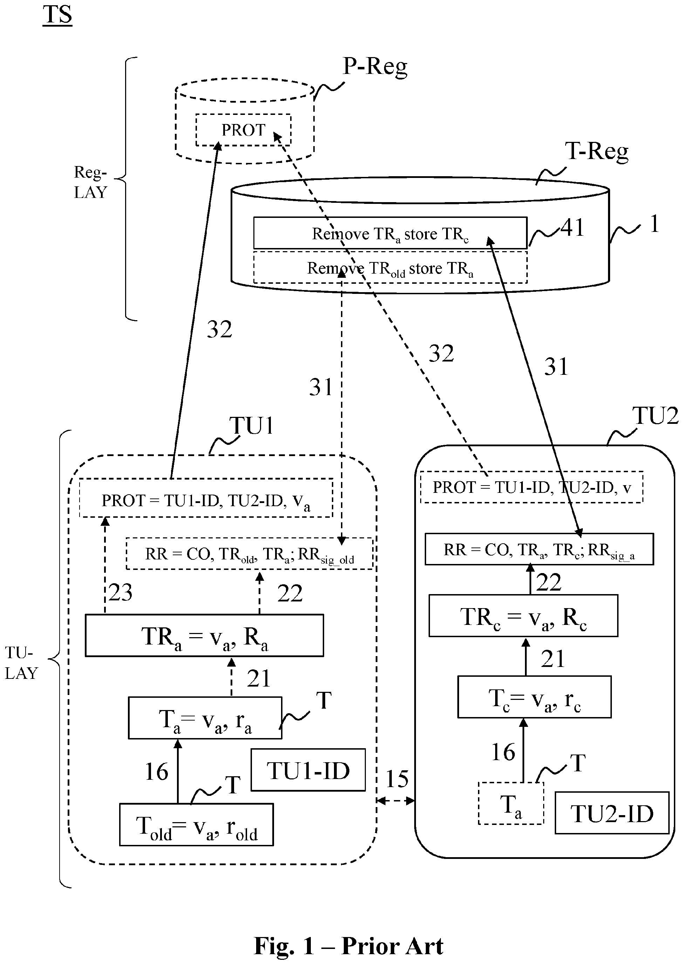

Fig. 1 shows an example of a secure electronic token transaction system TS with secure transaction units TU according to the prior art. The secure electronic token transaction system TS of Fig. 1, e.g., a payment transaction system, corresponds with the third approach as indicated above. The transaction system TS comprises a register layer Reg-LAY in which a token reference register T-Reg is arranged. The TS further comprises a direct transaction layer TU-LAY in which a plurality of transaction units TU may be provided, as an example, two transaction units TU1 and TU2 are shown in Fig. 1. TU1 and the TU2 have control means configured to generate registration requests RR that comprise modification-commands CO concerning a modification of a token, here Tₐ of the secure transaction unit TU1 and T_{c} of the secure transaction unit TU2.

The transaction units TU of the transaction system TS are arranged to exchange 15 tokens T directly with each other. In the case of Fig. 1, T_{old}, Tₐ and T_{c} are payment tokens, which are also referred to as digital coins, preferably CBDC. Each token T in the TS is generated by a transaction unit TU-I of a specific token issuer (not shown in Fig. 1).

Each token T can be modified, such as split, merged or switched, by applying modification-commands CO by each transaction unit TU.

Each token T can be generated by a transaction unit TUI of a token issuer and can also be deleted. A transaction unit TU-I of a token issuer is, for example, a commercial bank or a financial service provider unit FSP.

Modification-commands are compliant with the above described third approach and it is refrained from repeating these modifications here again. Each modification can be registered in the T-Reg by replacement requests (=registration requests) RR.

A token T is uniquely represented by a monetary value v as well as a random number r. Thus, each token T in this TS has at least two token elements.

The monetary value v as a first mandatory token element can be specified in a range of values from 1 to 2³¹-1. The random number r may be a number in the range of 0 to 2²⁵⁶ - 1, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

A transaction unit TU has exclusive access to a storage unit (vault) or includes a token memory in a data store of the transaction units TU.

For each token T, a token reference TR can be stored in the token reference register T-Reg. The token reference TR comprises the monetary value v (of the token T) and a public key R that corresponds to the private key r of the token-individual key pair. The token reference TR of the token T can be viewed at any time in the register T-Reg of the transaction system TS.

TU1 is in possession of T_{old} that comprises a monetary value vₐ as well as a random number r_{old}. TU1 switches T_{old} to Tₐ with a switch-modification in step 16. Tₐ comprises the monetary value vₐ (of the T_{old}) as well as a newly generated random number rₐ. In step 21, the TU1 generates a TRₐ that is uniquely assigned to the Tₐ.

This token reference TRₐ can be sent 31 to the token reference register T-Reg in form of a registration request RR by the TU1 (being generated in step 22), if necessary, together with a command CO.

Additionally, the registration request RR is signed with the private key r_{old}. Signing makes it possible to verify that TU1 is in possession/knowledge of the token T_{old}, further enhancing security in the transaction system TS.

The registration request RR generated 22 in TU1 relating to a switch-modification in Fig. 1 includes the modification command CO, the output token references TRₐ of token Tₐ to be registered and the input token reference TR_{old} of the token T_{old} to be removed from the token reference register T-Reg. The registration request RR also comprises a signed registration request RR_{sig_old}, which is the RR that is signed with the private part r_{old} of the token T_{old}.

This RR may be sent to T-Reg in step 31 to register TRₐ in the T-Reg. Every TU in the TS that receives the token Tₐ from TU1 can now verify whether Tₐ is a valid token T in the TS.

The token Tₐ (and maybe also TRₐ and/or the RR e.g., as a proof) may be transmitted 15 from TU1 to TU2, e.g. when performing a token transaction, such as a payment transaction. TU2 now performs a switch-modification to switch the token Tₐ from TU1 to become a token T_{c} of TU2. Therefore, a new random number r_{c} is generated at TU2 in step 16. However, vₐ remains the same token element also in the new T_{c}. A token reference TR_{c} is generated based on T_{c} in step 21 by TU2. Since vₐ is not changed, no money has been generated or deleted.

This token reference TR_{c} can be sent 31 to T-Reg as another registration request RR by the TU2 (being generated in step 22), together with a command CO.

Additionally, the RR is signed with the private key rₐ. Signing makes it possible to verify that TU2 is in possession of the (old) token Tₐ, further enhancing security in the TS.

The registration request RR generated 22 in TU2 relating to the switch-modification includes the switch-modification command CO, one output token reference TR_{c} of a token T_{c} to be registered and one input token reference TRₐ of the token Tₐ to be removed from the token reference register T-Reg. The registration request RRₛ also comprises a signed registration request RR_{sig_a}, which is the RR that is signed with the private part rₐ of the token Tₐ.

Each TU may store the RR as a so-called PROOF in case, no data connection to the T-Reg is available or is not desired, e.g., in an offline token transaction.

RR are sent 31 to the T-Reg. RR is received in the T-Reg. After RR has been checked by the T-Reg, the TRₐ is removed from the T-Reg and TR_{c} is stored in the T-Reg in step 41. The TR_{c} replaces the TRₐ so, the RR can also be referred to as replacement request. With storing the TR_{c}, the token T_{c} is registered in the TS.

Each TR is uniquely assigned to a T in the TS and the TR is used to register T in the TS. The TR is therefore the public representation of T from the direct transaction layer TU-LAY. Sole knowledge or possession of the TR alone does not allow the T to be transferred and is not equivalent to the TU being in possession of the T. The TR is used to prevent multiple spending attempts and checks whether token values v have been generated in an improper manner. Therefore, the TR and, if applicable, the history (the proofs) about the tokens T and the RR from TU(s) are stored in the T-Reg.

T may be stored, for example, in a secure wallet, as the TU. These wallets are, for example, software applications within a terminal device in which the TU is operationally embedded. A wallet may be set up as an application on a smartphone, smartcard, or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

As expressed earlier, a transaction within the TU-Lay does not require a communication link to the T-Reg of the TS. The TS is set up to perform a transaction offline, i.e., without a communication link to the T-Reg. A corresponding registration of token T may therefore be temporally downstream of a transfer of token T to a TU.

The T-Reg is a unit within the transaction system TS and is either a central register or database of the transaction system TS or a decentralized register or database (DLT) of the transaction system TS.

The public part R of the token individual key pair (as part of the TR) is generated by applying a cryptographic function to the private part r of the token individual key pair. This function is difficult to reverse and thus provides the transaction system TS with the required security. It holds that R = r * G, where G can be, for example, a global parameter of the transaction system TS, e.g., a generator points of an elliptic curve, here the secp256r1 curve. Any other suitable cryptographic function to receive the R value can be applied as well.

The subject name of a hardware TU (smart card) and a hosted TU (within a Service Provider Unit (not shown in Fig. 1)) may be the TU-ID. The TU-ID may need to fulfil some or all the following criteria:
The TU-ID may need to convey if it is a wallet certificate, or CA certificate or admin-CA end-entity certificate. The TU-ID may need to be small to be transferred and stored in a hardware wallet, e.g., a smart card. The TU-ID may need to fit into the subject field of a certificate, e.g., a length of 16 bytes should not be exceeded. The TU-ID may need to remain stable across changes to certificates. The TU-ID may need to contain information about an SPU, e.g., a financial service provider unit, FSP, that issued the TU, so that the token transaction processors can use to route data to other token transaction processors, e.g., to find the IP address of the token transaction processor.

The TU-ID should contain an identifier of the central bank (not shown in Fig. 1) to allow cross-currency transfers (=multi-currency transactions or multi-currency transaction systems). The TU-ID may need to contain an identifier within the FSP.

TU1 comprises a secure token transaction unit identifier TU1-ID. TU1-ID uniquely assigns the TU1 of the user within the TS. TU2 comprises a secure token transaction unit identifier TU2-ID. TU2-ID uniquely assigns the TU2 of the user within the TS.

In the transaction system TS, there may also be a protocol data register P-Reg. This P-Reg stores protocol data PROT that are generated in step 23 by each transaction unit TU after a transaction has been made. The PROT may include the TU1-ID, the TU2-ID and one or more token elements of the token T that is part of the token transfer 15. It can be defined that either the sender (TU1) or the receiver (TU2) or both transaction generate the PROT in respective steps 23 and provide the PROT to the P-Reg in step 32. This P-Reg is considered as a pure protocol unit and should not contain any token element of tokens T on which basis, the P-Reg would be in the position of the token T. In other words, the random number r (or the private key r) of each token T is not part of the PROT. However, the monetary value v of each token T may be part of the PROT to protocol the amount of monetary value v being transferred between TU1 and TU2.

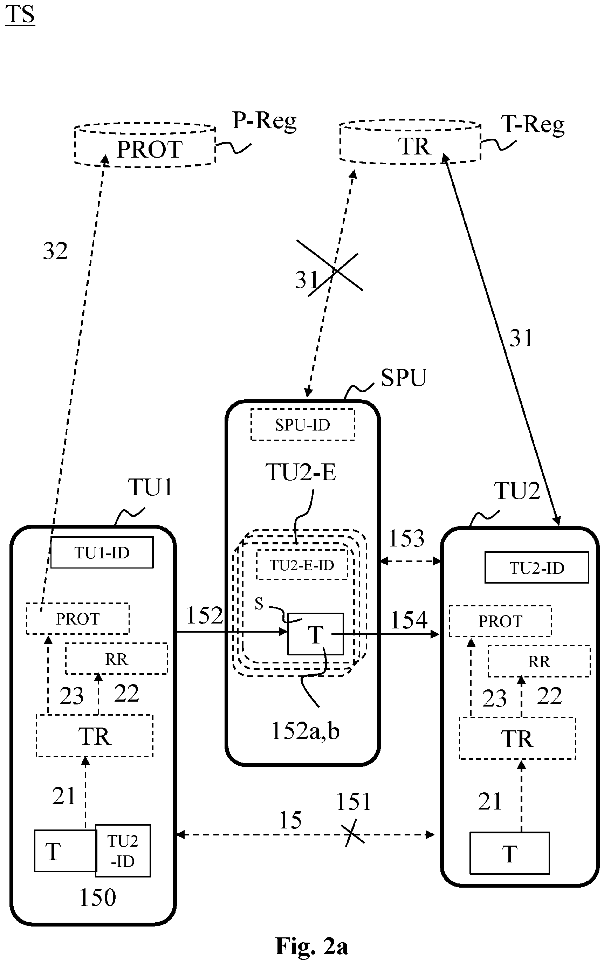

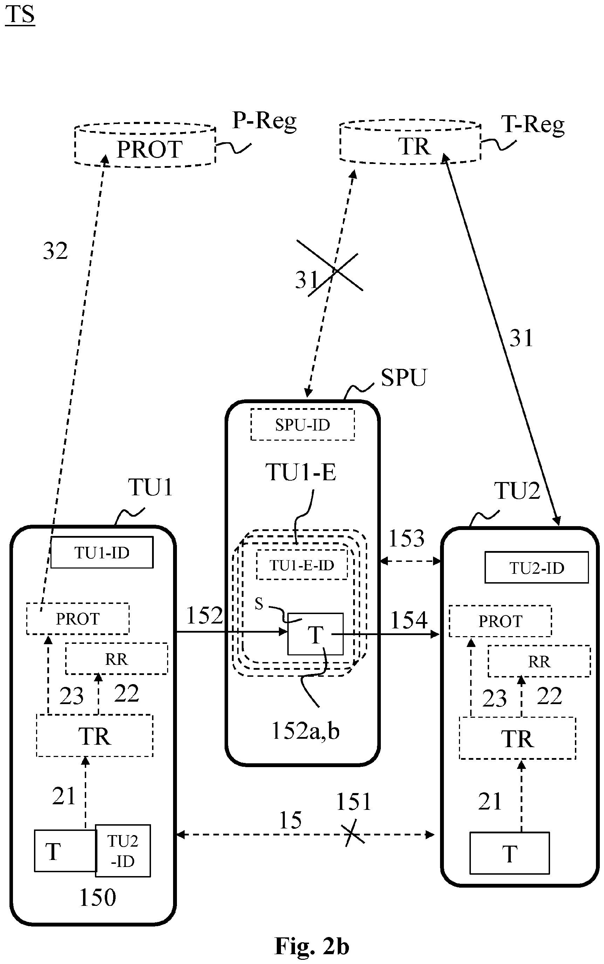

Fig. 2a and Fig. 2b show exemplary embodiments of TS having a secure service provider unit SPU according to the invention. All elements shown in Fig. 2a and described with reference to Fig. 2a and Fig. 2b are identical to corresponding elements of Fig. 1 with same reference signs unless otherwise stated. For these same elements, a further explanation is omitted. The Fig. 2a - in its core - shows a receiving service as an extension service as indicated with above uses case 2. The Fig. 2b - in its core - show a receiving service as an extension service as indicated with above uses case 1.

It is the overall goal of the invention to enable the transfer of tokens T to an inaccessible (=unreachable) secure transaction unit TU2 via a secure transaction unit extension TU-E, also referred to as proxy-wallet or intermediate wallet that receives the tokens T and causes its transmittal (forwarding) of the token T at a later stage, namely when the target secure transaction unit TU2 is accessible (reachable). So, participants/user, whose token transaction unit is temporarily or permanently not reachable, e.g., because a registration process may not be initiated or may not be completed or the TU2 is offline and an offline communication between TU1 and TU2 is not possible due to large distance or whatever, a token transaction is now still possible.

According to Fig. 2a, TU1 wants to send T to TU2 within a token transaction 15. It therefore has knowledge about the TU2-ID that is received prior the token transaction 15 or during an initiation of the transfer 15. During this transfer 15 attempt it is discovered, that TU2 is not reachable directly in step 151. This may be caused due to a long distance between TU1 and TU2 and offline token transaction is thus not an option. Also, a direct online communication is not possible, e.g., because TU2 is not online.

In this case, token T and identifier TU2-ID of the target transaction unit TU2 is provided to the SPU in step 152. The SPU, e.g., a FSP, comprises at least one TU extensions, TU-E, which are online representations of the TUs. Since TU2 was issued by SPU, the SPU hosts the TU-E, here TU2-E. Alternatively, since TU2 is managed by SPU, the SPU hosts the TU-E, here TU2-E. Managing may mean loading and unloading of TU2 with tokens T by the SPU, and/or filing RR to the T-Reg in the name of TU2.

Upon receipt of the T, a storage S of the TU-E is used to store the T temporarily in step 152a. In addition, the TU2 may certify the TU-E to receive T on its behalf by using a certificate (not shown in Fig. 2). However, upon sending the token T to the TU-E, the TU1 may also generate 23 the PROT to be send to the P-Reg in step 32. The PROT - since TU-E is only a proxy-TU, includes the TU1-ID, the TU2-ID, and the v of T to be registered at the P-Reg. So, the TU-E is transparent for the TS and especially invisible for the P-Reg.

Further, the TU-E does not perform any modification on the Token T, which is indicated by the crossed-out arrow for step 31 between SPU and T-Reg. The token T stays at it is and is not switched by the TU-E.

As soon as TU2 indicates its accessibility in step 153, the token T from the storage S is send 154 to the TU2. In the TU2, a switching operation may be performed (not shown) and the token T may be switched to TU2 by RR in step 22 and 31.

With this TS of Fig. 2a, a payment to offline target TU2 (that is not online during the token transfer 15 initiated by the TU1) is enabled by storing the token T in the TU-E within the FSP (SPU). If TU2 is online again (indicator in step 153), the TU-E forwards the token T in step 154.

So, T is transferred in step 152 between TU1 and TU-E. It is cached in S at the TU-E and then transferred to TU2 in step 154 once TU2 is reachable as indicated by step 153. So, unlike a normal TU, the TU-E (FSP proxy) will not switch T to a new token. From a system point of view, the TU-E is transparent to the TS, i.e., does not change T and optionally does not show up in the PROT either, the PROT being relevant for both fiscal issues and system monitoring. TU-E may have a certificate that certifies TU2 as its TU-E (proxy).

TU1 can so send the token and protocol the transaction by generating 23 "T1 with value v sent by TU1 to TU2", although the transfer did not happen to TU2 yet and is not yet completed.

According to Fig. 2a, the TU-E offers a token receiving service as extension service. TU-E is assigned to TU2 (see TU2-E reference sign in Fig. 2a) If TU2 is inaccessible (offline, switched-off) according to step 151, the TU2-E - temporarily - store the token T in step 152. As long as the TU2 is not accessible, the TU2-E operates as the TU2. As soon as TU2 is accessible again by providing the respective accessibility indication in step 153, the TU2-E transacts in step 154 the token(s) to the TU2.

According to Fig. 2b, TU1 wants to send T to TU2 within a token transaction 15. It therefore has knowledge about the TU2-ID that is received prior the token transaction 15 or during an initiation of the transfer 15. During this transfer 15 attempt it is discovered, that TU2 is not reachable directly in step 151. This may be caused due to a long distance between TU1 and TU2 and offline token transaction is thus not an option. Also, a direct online communication is not possible, e.g., because TU2 is not online.

In this case, token T and identifier TU2-ID of the target transaction unit TU2 is provided to the SPU in step 152. The SPU, e.g., a FSP, comprises at least one TU extensions, TU-E, which are online representations of the TUs. Since TU1 was issued by SPU, the SPU hosts the TU-E, here TU1-E. Alternatively, since TU1 is managed by SPU, the SPU hosts the TU-E, here TU1-E. Managing may mean loading and unloading of TU1 with tokens T by the SPU, and/or filing RR to the T-Reg in the name of TU1.

Upon receipt of the T, a storage S of the TU-E is used to store the T temporarily in step 152a. In addition, the TU1 may certify the TU-E to receive T on its behalf by using a certificate (not shown in Fig. 2). However, upon sending the token T to the TU-E, the TU1 may also generate 23 the PROT to be send to the P-Reg in step 32. The PROT - since TU-E is only a proxy-TU, includes the TU1-ID, the TU2-ID, and the v of T to be registered at the P-Reg. So, the TU-E is transparent for the TS and especially invisible for the P-Reg.

Further, the TU-E does not perform any modification on the Token T, which is indicated by the crossed-out arrow for step 31 between SPU and T-Reg. The token T stays at it is and is not switched by the TU-E.

As soon as TU2 indicates its accessibility in step 153, the token T from the storage S is send 154 to the TU2. In the TU2, a switching operation may be performed (not shown) and the token T may be switched to TU2 by RR in step 22 and 31.

With this TS of Fig. 2b, a payment to offline target TU2 (that is not online during the token transfer 15 initiated by the TU1) is enabled by storing the token T in the TU1-E within the FSP (SPU). If TU2 is online again (indicator in step 153), the TU-E forwards the token T in step 154.

So, T is transferred in step 152 between TU1 and TU1-E. It is cached in S at the TU1-E and then transferred to TU2 in step 154 once TU2 is reachable as indicated by step 153. So, unlike a normal TU, the TU-E (FSP proxy) will not switch T to a new token. From a system point of view, the TU-E is transparent to the TS, i.e., does not change T and optionally does not show up in the PROT either, the PROT being relevant for both fiscal issues and system monitoring. TU-E may have a certificate that certifies TU1 as its TU-E (proxy). TU1 can so send the token and protocol the transaction by generating 23 "T1 with value v sent by TU1 to TU2", although the transfer did not happen to TU2 yet and is not yet completed.

According to Fig. 2b, the TU-E offers a token sending service as extension service. TU-E is assigned to TU1 (see TU1-E reference sign in Fig. 2b) If TU2 is inaccessible (offline, switched-off) according to step 151, the TU1-E - temporarily - stores the token T in step 152. TU1-E operates as the TU1 and transfers the token T in step 154 as soon as TU2 is accessible again by providing the respective accessibility indication in step 153.

The TU-E of Fig. 2a and Fig. 2b also offers a plurality of further services, such as loading/unloading the TU1/TU2.

With this invention, the TU-E may also be a smart-contract storing service for TU1 or TU2.The sending of the stored token T in step 154 to the TU2 may be bound to one or more further condition and the sending of the stored token T in step 154 is only performed if the condition is fulfilled. So, not only an accessibility indication must be provided in step 153, also a condition, e.g. in the sense of a smart contract must be met. For example, such a condition may be a trigger signal that comes from another party, e.g. a governmental authority or a bank authority or a notary authority. Or the condition is a testable condition, such as a token transaction performing date such as "send after date XYZ" or that a website must be reachable. For conditions related to token transaction it is referred to patent application WO 2023 / 046 317 A1.

As indicated in Fig. 2a and Fig. 2b, there may be a plurality of TU-E hosted by the SPU, each may be dedicated to one TU in the TS. Alternatively, a TU-E may be assigned to a plurality of different TU, e.g. from different users in the TS.

Not explicitly shown in Fig 2a or Fig.2b is the further inventive idea to enable the transfer of tokens T from a local source secure token transaction unit via a local terminal that acts as a local (without online connectivity) receiver/sender for the source secure token transaction unit and that transfers the tokens to the target secure token transaction unit at a later stage, e.g. upon online connectivity of the local terminal. This covers uses cases 3 and 4 as provided above.

For these uses cases 3 and 4 token T may be offline provided from TU1 or TU2 to a local terminal - which may be a merchant of trust, such as a TSP, as shown in below drawings.

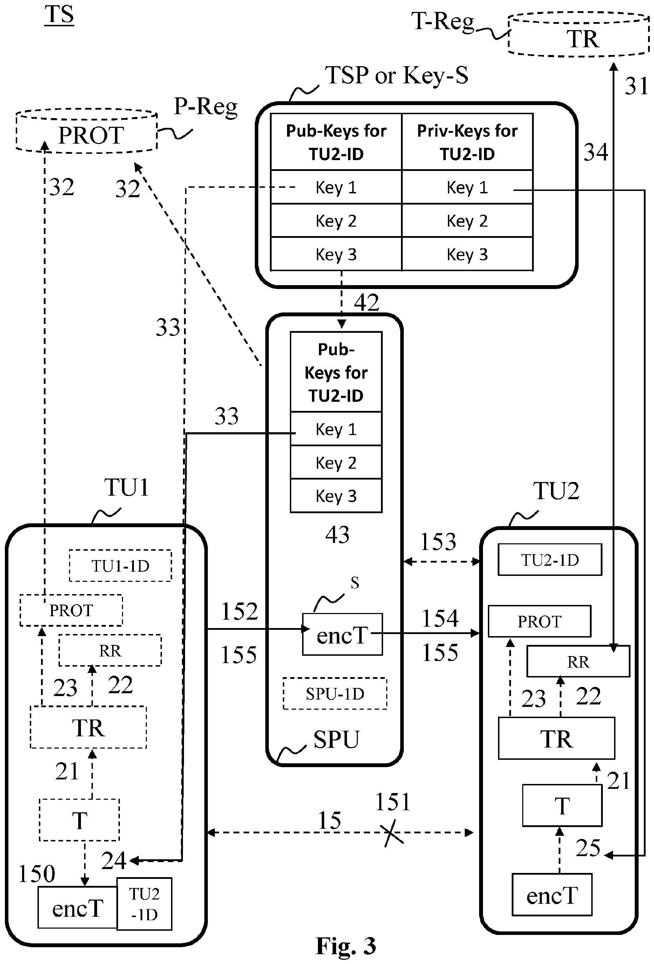

Fig. 3 shows another exemplary embodiment of TS having a secure service provider SPU according to the invention. All elements shown in Fig. 3 and described with reference to Fig. 3 are identical to corresponding elements of Fig. 1 and 2 if same reference signs are used unless it is otherwise stated. For these same elements, a further explanation is omitted.

As can be seen from Fig. 3, the TS further comprises a repository for key pairs, e.g. a trusted service provider TSP or Key-S. This TSP/Key-S stores a plurality of cryptographic key pairs for a plurality of TUs. Preferably, the Key-S is a part of the TU2. So, the TU2 generates and stores the key pairs that are used in the TS for further securing the token T.

In Fig. 3, the TSP or Key-S stores three key pairs for TU2. The TSP or Key-S provides the public keys of the key pairs for TU2 in step 42 to SPU (or TU-E within the SPU). In step 43, these public keys are stored in the SPU or the TU-E within the SPU. Prior sending 152 the token T, the TU1 requests a public key from the SPU in step 33 and it is received in the TU1 accordingly. The request 33 can alternatively or additionally be made at the TSP/key-S directly. In step 24, the TU1 encrypts T and receives encT. EncT and TU2-ID is transmitted in step 152. Preferably a key-ID, identifying the used public key for encrypting the T, is transmitted in step 155 as well to the SPU. Upon indication of accessibility in step 153, the encT is transmitted to the TU2 in step 154. Preferably a key-ID, identifying the used public key for encrypting the T, is transmitted in step 155 as well to the TU2.

In step 34, the TU2 receives the corresponding private key from the TSP or Key-S, e.g. based on the received Key-ID of step 155, and then decrypts the encT in step 25 to obtain T. In the preferred event, that the TU2 already comprises the Key-S, then the receiving step 34 is an internal TU2-process.

So, the token T is encrypt prior transfer 15. Only the target TU can decrypt the token T to use the monetary value v any further. This scenario of Fig. 3 may be applied to stuff ATMs which are offline storages with tokens that have monetary value v. The token is encrypted. If someone steals the ATM the tokens T stored therein cannot be used. Thus, a secured transmission of tokens T via encryption key encT is possible.

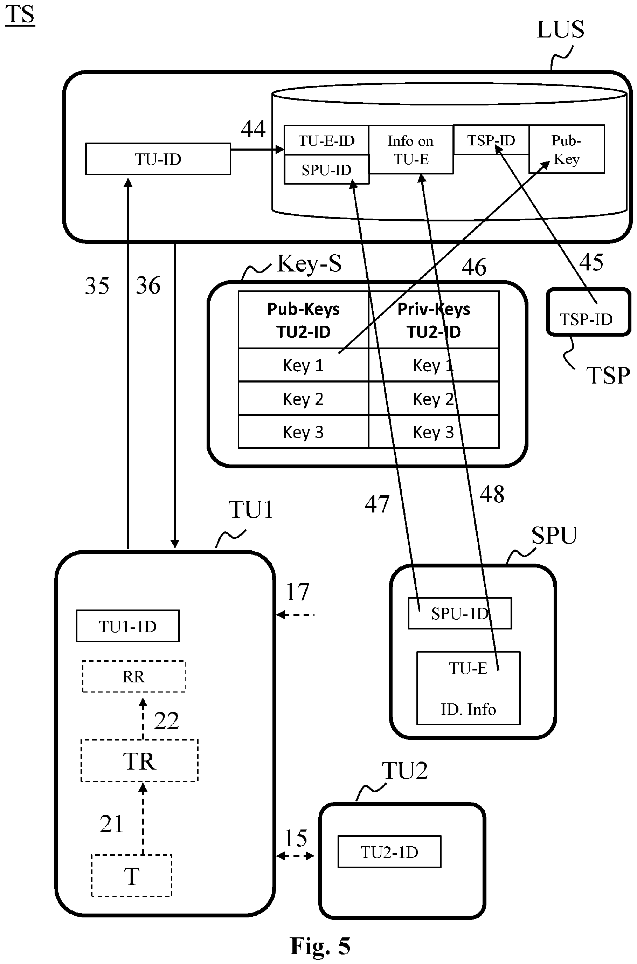

A lookup service - such as shown with LUS in Fig. 5 - may provide, upon request of a third party, for TU2, the address of the SPU (SPU-ID) for TU2 and/or the TU-E-ID of the TU-E for TU2 and/or the public key(s) for encrypting T for TU2 and/or the available TU-E services of TU2.

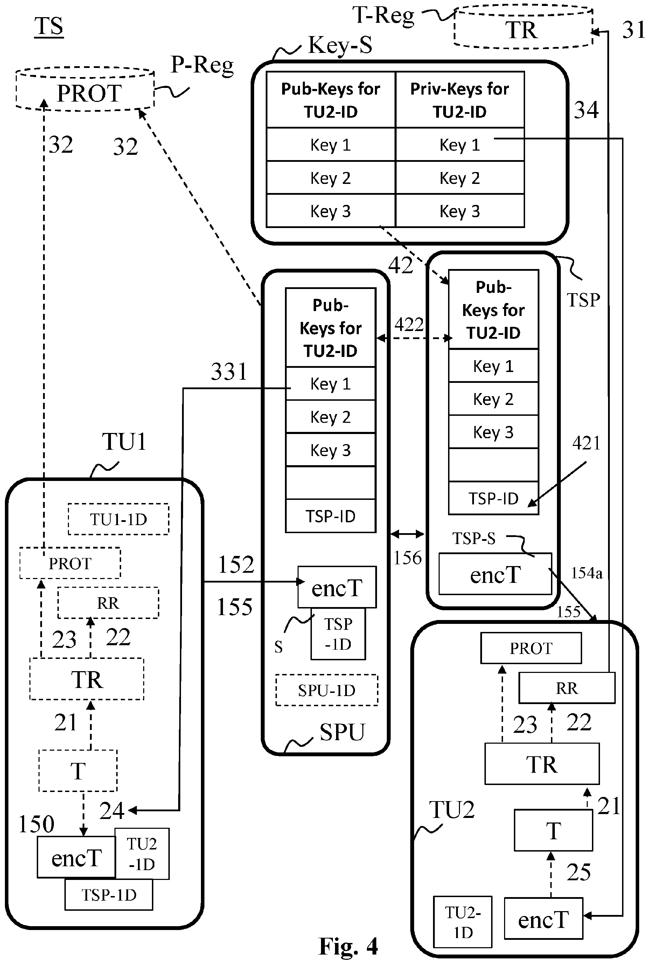

Fig. 4 shows another exemplary embodiment of TS having a secure service provider unit SPU according to the invention. All elements shown in Fig. 4 and described with reference to Fig. 4 are identical to corresponding elements of Fig. 1 and 2 and 3 if same reference signs are used unless it is otherwise stated. For these same elements, a further explanation is omitted.

In contrast to Fig. 3, the list of public keys for TU2 are transferred to a TSP in step 42. There, a TSP-ID is added in step 421. Then, the list of public keys with the TSP-ID is provided (forwarded) to the SPU (TU-E) in step 422. For the sake of completeness: This list of public keys (or the individual key) could also be transmitted directly from the Key-S (which may usually be located in the TU) to the SPU if there is an online connection at some point. The detour via the TSP is intended for the case that the TU never has internet connection (which is not unlikely, after all we also make a detour via the TSP when receiving tokens). In Step 331, one of the public keys with the TSP-ID is provided to the TU1. Token T is encrypted encT in step 24 and TU2-ID and TSP-ID is added. EncT together with TSP-ID is transmitted to the SPU in step 152 and stored in step 152a. Every now and then, the storages S of the TU-E and the TSP are updated in step 156, e.g. using a synchronization scheme. As a result thereof, the content of S of TU-E for TU2 and S of TSP for TU2 are identical. The TU2 now indicates its accessibility to the TSP (instead of TU-E) and receives the encT in step 154a via an offline transfer.

Fig. 4 covers a use case in which TU2 does not have online capabilities at all - or does not want to use them - and so, it receives the token T via the TSP as shown. So, TU 2 not having access to the internet at any time may still participate in the TS token transaction.

Fig. 5 shows another exemplary embodiment of TS having a secure register unit, ID-REG, according to the invention. All elements shown in Fig. 5 and described with reference to Fig. 5 are identical to corresponding elements of Fig. 1 and 2 and 3 and 4 if same reference signs are used unless it is otherwise stated. For these same elements, a further explanation is omitted.

Here, a lookup service is provided. Upon request of a third party, for TU2, the address of the SPU (SPU-ID) for TU2 and/or the TU-E-ID of the TU-E for TU2 and/or the public key(s) for encrypting T for TU2 and/or the available TU-E services of TU2.

So, based on the TU-ID all necessary information are available for each third party, such as the source secure transaction unit that so receives the information about public key to be used, the TSP to be addressed, the SPU to be used to find TU2-E and so on.

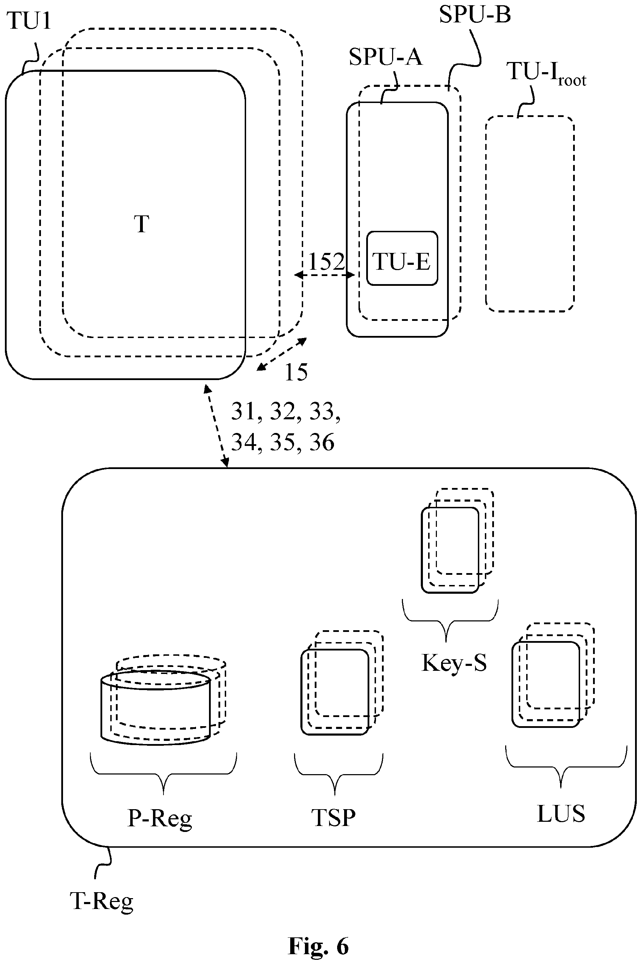

Fig. 6 shows another exemplary embodiment of a secure electronic token transaction system having a secure provider unit SPU according to the invention. Here, the SPU is included into the T-Reg for reducing the number of central instances (entities) within the TS.

In Fig. 6 it is indicated that a plurality of SPU, here SPU-A, SPU-B, exists that may all receive root tokens from a root token issuer TU-Iᵣₒₒₜ, e.g. a central bank. Tokens T may be newly issued or deleted.

These new tokens T may be issued to the SPUs, also referred to as intermediate token issuers, such as commercial banks SPU-A, SPU-B and each having one or more TU-E. Here, token-type information may or may not be added to the Token T and these tokens T may be used in direct token exchange 15.

In Fig. 6 it is shown that a plurality of P-Regs, a plurality of TSP, a plurality of LUS and a plurality of Key-S may be logically connected or even residing in the T-Reg.

### REFERENCE SIGNS

- TS: Electronic (payment) transaction system
- TU: Transaction unit in TS, wallet
- SPU: Financial service provider unit
S retarded token storage
TU-E transaction unit extension
TU-E-ID transaction unit extension identifier
- SPU-ID: Identifier of SPU
- LUS: Look-Up-Service
Info Information on TU-E Capabilities
- TU-ID: Identification of TU, Wallet-ID
- Key-S: Key repository
- TSP: Trusted Service Provider Unit
- TSP-ID: TSP-Identifier
- TSP-S: TSP-Storage
- TU-Iᵣₒₒₜ: Root token Issuer unit
- T-Reg: Token reference register
1 Storage unit
- P-Reg: Protocol data register
- PROT: Protocol data
- Reg-LAY: Registration layer
- TU-LAY: Token transfer layer
- RR: Registration request, replacement request
- T: Token
- encT: Encrypted T
- TR: Token reference
- v: Monetary value of T
- r: Secret, private key of token-individual key pair
- R: public key of token-individual key pair
- CO: Command
- sig: Signature
- Pub-Key: Public Key of key pair
- Priv-Key: Private Key of Key pair
- 15: transfer of token
150 Initiate token transfer
151 inaccessible for token transfer
152 Transfer to SPU / TU-E
152a Store
152b Check TU-E certificate
153 Accessibility indication
154 transfer retarded token
154a offline transfer
155 Key-ID
156 Forward encrypted token / synchronization
- 16: Modify token
- 17: Receive TU-ID/ User-Info
- 21: Generate token reference
- 22: Generate RR
- 23: Generate PROT
- 24: Encrypt T
- 25: Decrypt T
- 31: registration request
- 32: protocol data transfer
- 33: Receive Pub-Key
331 Receive Pub-Key + TSP-ID
- 34: Receive Priv-Key, e.g. based on Key_ID
- 35: Request Info for TU
- 36: Receive Info from LUS
- 41: Replace TR by remove TR and store TR
- 42: Receive Pub-key(s) from TSP (e.g. Key_ID)
421 Add TSP-ID
422 Forward Pub-key(s) from TSP + TSP-ID
- 43: Store plurality of Pub-keys based on TU-ID
- 44: Look up information based on TU-ID
- 45: Insert TSP-ID
- 46: Insert Key
- 47: Insert SPU-ID
- 48: Insert TU-E-ID and Info on Capabilities

## Claims

1. A secure service provider unit (SPU) within an electronic token transaction system (TS), the secure service provider unit (SPU) comprising a secure transaction unit extension (TU-E), wherein the secure transaction unit extension (TU-E) being arranged in a communication path of an electronic token transaction between two secure transaction units (TU1, TU2) and the secure transaction unit extension (TU-E) being assigned to one of the two secure transaction units (TU1, TU2), the secure transaction unit extension (TU-E) being configured to:
• receive (152), from a source secure transaction unit (TU1), a token (T) and a secure transaction unit identifier (TU2-ID), wherein the secure transaction unit identifier (TU2-ID) identifies a target secure transaction unit (TU2) to which the token (T) is to be sent;
• store (152a) the received token (T) in a retarded token storage (S); and
• receive (153), from the target secure transaction unit (TU2), an accessibility indication that causes the secure transaction unit extension (TU-E) to send (154) the stored token (T) to the target secure transaction unit (TU2).

2. The secure service provider unit (SPU) according to claim 1, wherein one of the source secure transaction unit (TU1) and the target secure transaction unit (TU2) and/or the secure transaction unit extension (TU2-E) being issued and/or managed by the secure service provider unit (SPU).

3. The secure service provider unit (SPU) according to one of the preceding claims, wherein the secure transaction unit extension (TU2-E) comprises a secure transaction unit extension certificate and/or a secure transaction unit extension identifier configured to indicate the secure transaction unit extension (TU-E) within any token transaction.

4. The secure service provider unit (SPU) according to claim 3, wherein the secure transaction unit extension certificate is used within the receipt (152) of the token (T) from the source secure transaction unit (TU1) that causes generation of protocol data to be stored in a protocol data register (P-Reg), the protocol data comprising the source secure transaction unit identifier (TU1-ID) and the target secure transaction unit identifier (TU2-ID) and one or more token elements of the token (T).

5. The secure service provider unit (SPU) according to one of the preceding claims,
wherein the secure transaction unit extension (TU-E) is configured to:
• operate as one or as the target secure transaction unit (TU2) within the electronic token transaction system (TS) and transfers the token to the target secure transaction unit (TU2) as soon as the target secure transaction unit (TU2) indicates its accessibility; or
• operate as one or as the source secure transaction unit (TU1) within the electronic token transaction system (TS) and transfers the token to the target secure token transaction unit (TU2) as soon as the target secure transaction unit (TU2) indicates its accessibility.

6. The secure service provider unit (SPU) according to one of the preceding claims, wherein the secure transaction unit extension (TU-E) is configured to cause the sending (154) of the stored token (T) to the target secure transaction unit (TU2) if a condition for sending the stored token (T) is fulfilled.

7. The secure service provider unit (SPU) according to one of the preceding claims, wherein the token (T) is received, stored, and sent in encrypted form (encT), preferably together (155) with a key identifier (key_ID).

8. The secure service provider unit (SPU) according to claim 7 and further configured to provide (33) a public key of a cryptographic key pair to the source secure transaction unit or the target secure transaction unit, preferably further configured to store (43) a plurality of public key of cryptographic key pairs for the source secure transaction unit or the target secure transaction unit.

9. The secure service provider unit (SPU) according to claim 7 or 8 further configured to hosting a plurality of secure transaction unit extensions (TU-E) and preferably further configured to store (43) a plurality of public keys of cryptographic key pairs based on respective secure transaction token identifiers (TU-ID).

10. The secure service provider unit (SPU) according to one of the preceding claims 7 to 9, wherein the encrypted token (T) comprises a trusted service provider identifier (TSP-ID) of a trusted service provider unit (TSP) to which the encrypted token (encT) is forwarded (156) for being stored in a trusted service provider storage (TSP-U).

11. The secure service provider unit (SPU) according to claim 10 configured to provide the public key together with the trusted service provider identifier (TSP-ID) of the trusted service provider unit (TSP), preferably being a secure merchant transaction unit.

12. A secure token transaction unit (TU) for managing token transactions in an electronic payment transaction system (TS), the secure token transaction unit (TU) comprising:
• means for transmitting (152), to a secure transaction unit extension (TU-E) of a secure service provider unit (SPU) or a local terminal that provides an extension service for the secure token transaction unit (TU), a token (T) and a secure transaction unit identifier (TU-ID), wherein the secure transaction unit identifier (TU-ID) assigns a target secure transaction unit (TU) to which the token (T) is to be sent;
• means for sending (153), to the secure transaction unit extension (TU-E) of the secure service provider unit (SPU), an accessibility indication that causes the secure transaction unit extension (TU-E) of the secure service provider unit (SPU) or the local terminal to send (154) the stored token (T) to the target secure transaction unit (TU); and/or
• means for sending a token to the secure transaction unit extension (TU-E) of the secure service provider unit (SPU), in case a target secure transaction unit (TU2) is not accessible; and
• preferably further comprising means for transmitting protocol data (PROT) to a protocol data register (P-Reg) of the electronic transaction system (TS) for protocolling a token transaction in the electronic token transaction system (TS); and
• preferably further comprising means for transmitting registration requests (RR) to a token reference register (T-Reg) of the electronic transaction system (TS) for registering the tokens (T) in the electronic payment transaction system (TS).

13. An electronic token transaction system (TS) comprising:
• a plurality of secure token transaction units (TU) according to claim 12;
• one or more secure service provider units (SPU) according to one of the preceding claims 1 to 11, wherein each retarded token storage (S) is configured to store (152a) received token (T);
• preferably further comprising:
o a secure token issuing unit (CB) comprising:
■ a minting unit configured to generate a new token to be issued in the electronic token transaction system (TS); and
■ a melting unit configured to delete tokens to be deleted from the electronic transaction system (TS);
∘ one or more secure token reference register units (T-Reg) for registering the tokens (T) of the electronic transaction system (TS);
∘ one or more protocol data register (P-Reg) for protocolling token transactions in the electronic token transaction system (TS).

14. The electronic token transaction system (TS) of claim 13, further comprising one or more trusted service provider units (TSP) configured to:
• provide public keys for encrypting the tokens to the secure transaction unit; and/or
• receive the encrypted token (encT) for being stored in a storage of the trusted service provider unit.

15. The electronic token transaction system (TS) of claim 13 or 14, further comprising a look-up service (LUS) configured to store:
• a link between a secure transaction unit identifier (TU-ID) and a secure transaction unit extension identifier (TU-E-ID); and/or
• a link between a secure transaction unit identifier (TU-ID) and a secure service provider unit identifier (SPU-ID); and/or
• a link between a secure transaction unit identifier (TU-ID) and a public key used for encrypting a token; and/or
• a link between a secure transaction unit identifier (TU-ID) and services provided by a secure transaction unit extension (TU-E).

16. A method for secure token transaction in an electronic token transaction system (TS), the method being performed in a service provider unit (SPU), preferably according to one of the preceding claims 1 to 11, the method comprising the following steps:
• receive (152), from a source secure transaction unit (TU), a token (T) and a secure transaction unit identifier (TU-ID), wherein the secure transaction unit identifier (TU-ID) assigns a target secure transaction unit (TU) to which the token (T) is to be sent;
• store (152a) the received token (T) in a retarded token storage (S); and
• receive (153), from the target secure transaction unit (TU), an accessibility indication that causes the secure transaction unit extension (TU-E) to send (154) the stored token (T) to the target secure transaction unit (TU).

## Amended claims

### Amended claims in accordance with Rule 137(2) EPC.

1. A secure service provider unit (SPU) within an electronic token transaction system (TS), the secure service provider unit (SPU) comprising a secure transaction unit extension (TU-E), wherein the secure transaction unit extension (TU-E) being arranged in a communication path of an electronic token transaction between two secure transaction units (TU1, TU2) and the secure transaction unit extension (TU-E) being assigned to one of the two secure transaction units (TU1, TU2), the secure transaction unit extension (TU-E) being configured to:
• receive (152), from a source secure transaction unit (TU1), a token (T) and a secure transaction unit identifier (TU2-ID), wherein the secure transaction unit identifier (TU2-ID) identifies a target secure transaction unit (TU2) to which the token (T) is to be sent;
• store (152a) the received token (T) in a retarded token storage (S); and
• receive (153), from the target secure transaction unit (TU2), an accessibility indication that causes the secure transaction unit extension (TU-E) to send (154) the stored token (T) to the target secure transaction unit (TU2), wherein the token (T) comprises a monetary value as a token element.

2. The secure service provider unit (SPU) according to claim 1, wherein one of the source secure transaction unit (TU1) and the target secure transaction unit (TU2) and/or the secure transaction unit extension (TU2-E) being issued and/or managed by the secure service provider unit (SPU).

3. The secure service provider unit (SPU) according to one of the preceding claims, wherein the secure transaction unit extension (TU2-E) comprises a secure transaction unit extension certificate and/or a secure transaction unit extension identifier configured to indicate the secure transaction unit extension (TU-E) within any token transaction.

4. The secure service provider unit (SPU) according to claim 3, wherein the secure transaction unit extension certificate is used within the receipt (152) of the token (T) from the source secure transaction unit (TU1) that causes generation of protocol data to be stored in a protocol data register (P-Reg), the protocol data comprising the source secure transaction unit identifier (TU1-ID) and the target secure transaction unit identifier (TU2-ID) and one or more token elements of the token (T).

5. The secure service provider unit (SPU) according to one of the preceding claims, wherein the secure transaction unit extension (TU-E) is configured to:
• operate as one or as the target secure transaction unit (TU2) within the electronic token transaction system (TS) and transfers the token to the target secure transaction unit (TU2) as soon as the target secure transaction unit (TU2) indicates its accessibility; or
• operate as one or as the source secure transaction unit (TU1) within the electronic token transaction system (TS) and transfers the token to the target secure token transaction unit (TU2) as soon as the target secure transaction unit (TU2) indicates its accessibility.

6. The secure service provider unit (SPU) according to one of the preceding claims, wherein the secure transaction unit extension (TU-E) is configured to cause the sending (154) of the stored token (T) to the target secure transaction unit (TU2) if a condition for sending the stored token (T) is fulfilled.

7. The secure service provider unit (SPU) according to one of the preceding claims, wherein the token (T) is received, stored, and sent in encrypted form (encT), preferably together (155) with a key identifier (key_ID).

8. The secure service provider unit (SPU) according to claim 7 and further configured to provide (33) a public key of a cryptographic key pair to the source secure transaction unit or the target secure transaction unit, preferably further configured to store (43) a plurality of public key of cryptographic key pairs for the source secure transaction unit or the target secure transaction unit.

9. The secure service provider unit (SPU) according to claim 7 or 8 further configured to hosting a plurality of secure transaction unit extensions (TU-E) and preferably further configured to store (43) a plurality of public keys of cryptographic key pairs based on respective secure transaction token identifiers (TU-ID).

10. The secure service provider unit (SPU) according to one of the preceding claims 7 to 9, wherein the encrypted token (T) comprises a trusted service provider identifier (TSP-ID) of a trusted service provider unit (TSP) to which the encrypted token (encT) is forwarded (156) for being stored in a trusted service provider storage (TSP-U).

11. The secure service provider unit (SPU) according to claim 10 configured to provide the public key together with the trusted service provider identifier (TSP-ID) of the trusted service provider unit (TSP), preferably being a secure merchant transaction unit.

12. A secure token transaction unit (TU) for managing token transactions in an electronic payment transaction system (TS), the secure token transaction unit (TU) comprising:
• means for transmitting (152), to a secure transaction unit extension (TU-E) of a secure service provider unit (SPU) or a local terminal that provides an extension service for the secure token transaction unit (TU), a token (T) and a secure transaction unit identifier (TU-ID), wherein the secure transaction unit identifier (TU-ID) assigns a target secure transaction unit (TU) to which the token (T) is to be sent;
• means for sending (153), to the secure transaction unit extension (TU-E) of the secure service provider unit (SPU), an accessibility indication that causes the secure transaction unit extension (TU-E) of the secure service provider unit (SPU) or the local terminal to send (154) the stored token (T) to the target secure transaction unit (TU); and/ or
• means for sending a token to the secure transaction unit extension (TU-E) of the secure service provider unit (SPU), in case a target secure transaction unit (TU2) is not accessible; and
• preferably further comprising means for transmitting protocol data (PROT) to a protocol data register (P-Reg) of the electronic transaction system (TS) for protocolling a token transaction in the electronic token transaction system (TS); and
• preferably further comprising means for transmitting registration requests (RR) to a token reference register (T-Reg) of the electronic transaction system (TS) for registering the tokens (T) in the electronic payment transaction system (TS),
• wherein the token comprises a monetary value as a token element.

13. An electronic token transaction system (TS) comprising:
• a plurality of secure token transaction units (TU) according to claim 12;
• one or more secure service provider units (SPU) according to one of the preceding claims 1 to 11, wherein each retarded token storage (S) is configured to store (152a) received token (T);
• preferably further comprising:
∘ a secure token issuing unit (CB) comprising:
▪ a minting unit configured to generate a new token to be issued in the electronic token transaction system (TS); and
▪ a melting unit configured to delete tokens to be deleted from the electronic transaction system (TS);
∘ one or more secure token reference register units (T-Reg) for registering the tokens (T) of the electronic transaction system (TS);
∘ one or more protocol data register (P-Reg) for protocolling token transactions in the electronic token transaction system (TS).

14. The electronic token transaction system (TS) of claim 13, further comprising one or more trusted service provider units (TSP) configured to:
• provide public keys for encrypting the tokens to the secure transaction unit; and/ or
• receive the encrypted token (encT) for being stored in a storage of the trusted service provider unit.

15. The electronic token transaction system (TS) of claim 13 or 14, further comprising a look-up service (LUS) configured to store:
• a link between a secure transaction unit identifier (TU-ID) and a secure transaction unit extension identifier (TU-E-ID); and/or
• a link between a secure transaction unit identifier (TU-ID) and a secure service provider unit identifier (SPU-ID); and/ or
• a link between a secure transaction unit identifier (TU-ID) and a public key used for encrypting a token; and/ or
• a link between a secure transaction unit identifier (TU-ID) and services provided by a secure transaction unit extension (TU-E).

16. A method for secure token transaction in an electronic token transaction system (TS), the method being performed in a service provider unit (SPU), preferably according to one of the preceding claims 1 to 11, the method comprising the following steps:
• receive (152), from a source secure transaction unit (TU), a token (T) and a secure transaction unit identifier (TU-ID), wherein the secure transaction unit identifier (TU-ID) assigns a target secure transaction unit (TU) to which the token (T) is to be sent;
• store (152a) the received token (T) in a retarded token storage (S); and
• receive (153), from the target secure transaction unit (TU), an accessibility indication that causes the secure transaction unit extension (TU-E) to send (154) the stored token (T) to the target secure transaction unit (TU).
